# EUROPEAN PATENT APPLICATION

(11) **EP 4 701 199 A1**
(43) Date of publication of application: **25.02.2026**
(21) Application number: 24195496.5
(22) Date of filing: 20.08.2024
(51) Int. Cl.: H04N 21/234, H04N 21/454, H04N 21/84, H04N 21/845

(54) **METHOD OF DISPLAYING MEDIA CONTENT**

(71) Applicant: Nagravision Sàrl, 1033 Cheseaux-sur-Lausanne (CH)
(72) Inventor: GUPTA, Sanjay Kumar, 1033 Cheseaux-sur-Lausanne (CH)
(74) Representative: Parker, Andrew James

(57) **Abstract**

A computer-implemented method of displaying media content is provided, the media content comprising video content and corresponding audio content. The method comprises: extracting metadata from the media content, and, during playback of a media segment of the media content, automatically executing a display action. The metadata comprises one or more metadata portions, each metadata portion describing a respective media segment of a plurality of media segments of the media content and a classification of the respective media segment; each classification indicating a category related to the nature of the media content in the media segment. The display action is determined based on: (i) the category indicated by the classification of the metadata portion describing that media segment; and (ii) control data comprising an association between the category and a respective display action.

## Description

### FIELD OF THE INVENTION

The present invention relates to a computer-implemented method of displaying media content, and a computer program product for displaying media content.

### BACKGROUND

Many over-the-top (OTT) media service providers offering services of digital content streaming directly to end users via the Internet are using a content delivery network, CDN, to enable delivery of the digital contents to the end users.

OTT media content for playback by users, such as films and TV shows which are streamed over the internet, is typically classified by genre and by age category (e.g., PG, 12, NC-17). Therefore, users may choose whether or not they wish to watch the media content based on this information. However, some users may wish to watch the media content, but skip or mute some scenes in the media content, depending on the content of those scenes. Currently, users must manually perform these actions depending on the content in those scenes.

Typical, OTT media content does not contain information about the content of individual portions of that media content. Therefore, users who wish to avoid watching certain types of media must avoid watching that media content entirely or manually perform an action (such as skipping or muting a portion of the media content) after determining for themselves what is being shown in that portion of the media content. This is particularly troublesome for parental controls where users may wish to restrict the type of content which is viewed by children.

Therefore, there is a desire for a system which enables users to have more control over the types of media content that they are watching. The present invention has been devised in light of the above considerations.

### SUMMARY OF THE INVENTION

Broadly, the present invention relates to a method of automatically controlling the display of media content based on metadata which contains information about the content of each of a plurality of segments of the media content. Therefore, more accurate analysis of the media content can be achieved enabling more effective control of the media content depending on the type of content in each segment. In particular, the automatic control the media content may be based on user preference information, the user preference information containing categories of media content that a user has flagged as deserving of an action.

Accordingly, in a first aspect of the present invention there is provided a computer-implemented method of displaying media content, the media content comprising video content and corresponding audio content, wherein the method comprises: extracting metadata from the media content, the metadata comprising one or more metadata portions, each metadata portion describing a respective media segment of a plurality of media segments of the media content, and comprising a classification of the respective media segment, the classification indicating a category related to the nature of the media content in the media segment; and during playback of (a media segment of) the media content, automatically executing a display action, the display action determined based on the extracted metadata. Specifically, the display action may be determined based on: (i) the category indicated by the classification of the metadata portion describing that media segment; and (ii) control data comprising an association between the category and a respective display action.

By automatically performing a display action based on metadata portions corresponding to a plurality of media segments, more precise and adaptable control of the media playback is possible than existing systems which provide only information about the media content as a whole. Moreover, by determining the display action based on control data, respective display actions may be defined for different categories based on, for example, user preferences, age ratings, or service provider recommendations etc. Accordingly, more different actions can be performed depending on the classification of each media segment.

The computer-implemented method may be executed by a media player which may be a client device or platform configured to display the media content such as a computer or server which is configured to receive and play the media content. In other examples, the computer-implemented method may be executed by a remote server which is configured to stream media content for playback on a client device. The remote server may be a media content provider configured to provide media content to a plurality of media players.

The computer-implemented method may be executed by a combination of a media player and a remote server. For example, playback of the media content may comprise requesting the media segments from a content provider system (e.g., the remote server). For example, the media player may send an access request to access a media content to a content provider system (e.g., the remote server). The method may then include, in response, receiving from the content provider system, media content data of the requested content.

The media content may be or comprise a digital media file containing, for example, a movie, video clip, or episode of a TV show etc. The digital media file may contain the video content e.g., as a video stream of the digital media file which contains video frames for display at a predetermined framerate and the audio content e.g., as an audio stream of the digital media file in the form of an audio file or sound recording.

The computer-implemented method may further comprise receiving the media content from a media content source such as the remote server. The media content may be received over the internet from a third party. For example, the media content may be OTT (over-the-top) media content. OTT content may be considered as audio, video, and other digital media content for streaming or transmission over a content delivery network. For example, the digital media content may be delivered over the internet, without the involvement of a multiple-system operator (MSO) in the control or distribution of the content.

The metadata may be additional information about the media content which is contained in the digital media file. The metadata may be text including an Extensible Markup Language (XML) such as JavaScript Object Notation (JSON). The metadata may include information about the media file which was originally provided as metadata by the media content source such as an age rating and/or a title of the media content. The metadata portions describing the media segments may be considered as additional information. Accordingly, the metadata may also be referred to herein as "extended metadata", the extended metadata including the metadata portions describing one or more of the media segments and including a classification of the media segments.

The metadata may be included in a manifest file. In further examples, the manifest file may include a network address of the metadata (e.g., an address of the metadata on a remote server). Thus, the method may comprise sending an initial content request requesting a content manifest or playlist file of the requested media content. Then, subsequent content requests may request the media segments, chunks and/or other resources needed to use or play the requested media content, based on the manifest file.

The manifest or playlist file of a media content may contain information about network addresses (e.g., URLs) of media segments, chunks or other resources of the requested content (e.g., the metadata). The segment network addresses (e.g., segment URLs) may be relative addresses (e.g., in the remote server). They may be built from a root part of the received network address of the manifest file by adding segment identifiers, for example segment indexes or numbers, contained in the manifest file.

Each metadata portion may be a respective section of the metadata which defines a media segment (e.g., a chunk) and includes the classification indicating a category of the content in each media segment. The classification may indicate one or more categories of the content in each media segment. Each metadata portion may include timing information such as a timestamp and/or a duration for a respective media segment, thereby defining a position, with respect to time, of the respective media segment in the media content.

The media segments defined by each media portion may be the same or different lengths, or the same or different number of video frames. That is, each media segment may comprise a same quantity of data or a predefined duration of the media content (with an optional exception being a last media segment of the media content). In other examples, a length of each media segment may be determined by a duration of a section of the media content which is determined to contain content of the same classification. For example, each media segment may refer to a type or class of scene in the media segment of a particular category. For example, a scene forming a media segment may include an action scene, an intimate scene, a musical scene, etc.

The media segments may be successive/sequential/adjacent sections of the media content (wherein the media segments may form an entirety of the media content). Alternatively, the metadata may comprise metadata portions relating to only some of the media content such that the media segments correspond only to classified portions of the media content. Therefore, each media segment described by the metadata may correspond to a respective classification and the media content may also include unclassified portions of media content which are not defined in the metadata. This may reduce a file size of the metadata, particularly in applications where only a small number (e.g., one) of categories are of interest and where, for example, the media content contains only a small number (e.g., one) of media segments containing content which falls into the categories of interest. Accordingly, in these examples, the metadata need only contain metadata portions describing those segments.

The classification may be a data type or field of the metadata indicating the category associated with the nature of content in the respective media segment. The category may be selected from a predetermined set of categories. The classification of each media segment may indicate one or more categories from the predetermined set of categories associated with the nature of content in the respective media segment. The one or more categories may comprise one or more genres and/or one or more types of action taking place in the media content. Accordingly, the categories may be referred to herein as media categories, or types/classes of media content. In further examples, the one or more categories may include a determined age-rating, or a flag (e.g., an indication) that certain content is included in a respective media segment. Examples of the one or more categories may include: violent scenes, intimate scenes, scenes with explicit language, foreign language scenes, comedy, action, scenes with flashing lights, scenes containing gore or graphic content, adult content, PG, 12, NC-17, etc.

The computer-implemented method may comprise determining the classification of each media segment and generating the extended metadata. In other examples, the classification of each media segment may be pre-determined, for example, by a metadata generation module. The extended metadata may be generated on a client device or server, or at on a remote (third-party) server. For example, the metadata may be generated on a remote server and provided to all users of a streaming service.

The display action may be an adjustment to the playback of (a media segment of) the media content compared to a normally intended playback of (that segment of) the media content. For example, the display action may comprise one or more of: automatically skipping the display of a media segment; editing or modifying the video content of a media segment and/or audio content of a media segment; ceasing display of the video content for a media segment; and muting production of the audio content for a media segment. As discussed in detail below, a display action to be performed for each media segment may be determined based on preferences or sensitivities of a user (e.g., which may be defined in the control data). "Display" as used herein is intended to include the playing of video content and of audio content. The display action may therefore be referred to as a playback action or a task. The computer-implemented method may further comprise determining the display action based on the extracted metadata and/or the control data. Determining the display action may be performed prior to the playback of the media content. In other examples, the display action (or a respective display action e.g., for each media segment) may be determined during playback of the media content. For example, a display action buffering process may be performed during playback of the media content wherein a respective display action is determined for each of the media portions before the playback of the respective media segment described by that media portion.

The display action may be determined based on the category indicated by the classification of the media segments in the media content. For example, the display action may include skipping display of one or more media segments depending on the classification of those media segments. Further, the display action may be determined based on predetermined actions defined for each of the one or more categories (provided in the control data), based on user defined preferences and/or priorities, and/or based on default settings associated with the playback system or a user account.

Determining the display action may comprise determining one or more respective display actions to be executed for each media segment based on the extracted metadata.

For example, the display action may be determined using a lookup step wherein the display action (or each respective display action) is selected from a list of predetermined display actions (provided in the control data) based on the extracted metadata. The display action may be selected from the predetermined list of display actions based on the category indicated by the classifications in the extracted metadata.

The list of predetermined display actions may include one or more of: automatically skipping the display of a media segment; playing a media segment; editing (e.g., blurring) the video content and/or audio content of a media segment; ceasing display of the video content for a media segment; muting production of the audio content for a media segment, editing the video content and/or audio content of a media segment, or any other display action mentioned herein. In further examples, the display action may include displaying/playing only certain parts of the video or audio content, e.g., blurring certain parts of the video content or muting/fuzzing of the audio content.

The predetermined list may form the display actions included in the control data as mentioned above, wherein each category is associated with one or more display actions and, optionally, user preference information.

When the display action includes blurring the video content of a media segment, executing the display action may include adjusting a scale of a display quality of the video content to degrade the display quality. For example, a scaler of a media player may be configured to downscale the resolution of the media content. For example, the display quality may be reduced from UHD (ultra-high-definition) or HD (high-definition) to SD (standard definition) (or other available scales) for that media content. In some examples, the operation of downscaling may be performed by determining an average pixel value of the respective light intensity and/or colour for portions of images forming the video content. Each portion may be referred to as a block which may be a collection of pixels, such as for instance 16x16 pixels. Each average may then provide 1 pixel in the downscaled media content.

The video content may then be upscaled the resolution of the downscaled media content (e.g., a desired resolution). The displayed resolution can be restored to the initial resolution, but the average pixel value is populated evenly to all pixels in each block. The specific pixel values of the pixels in each block are lost, thereby providing a high-resolution image with low resolution (averaged) intensity and/or colour information.

In another example, the blurring can be performed by overlaying one or more images of the video content with a given transparency value. Hence, the overlaying image is non-transparent (i.e. opaque). This image may look like a milky frame on the display (i.e., during playback of the media content). The media player may be configured to overlay this image with the current images during the display of the segment marked for blurring. Optionally, the transparency level of the overlayed image can be adjusted based on an average of the intensity and/or colour values of the images forming the video content of the media segment.

In these examples, blurring of the media segment may be performed by a media player (e.g., a client device). Thus, the blurring of the media segment may be performed during playback (e.g., live) after the media segment had been received from a media content provider.

In other examples, the computer-implemented method of any preceding claim may further comprise: retrieving a pre-processed version of the media segment for playback. Retrieving the pre-processed version may include requesting and receiving the pre-processed version from content delivery network (e.g., from a remote server). The pre-processed version may be an edited version of the media segment. Therefore, the method may comprise requesting and displaying an edited version or an unedited version of the media segment depending on the category indicated by the classification of that media segment in the metadata and on the control data.

For example, when the display action includes editing or blurring of a media segment, executing the display action may comprise receiving an alternative media segment (e.g., an edited version) from a media content provider, the alternative media segment comprising an edited version (e.g., a blurred version) of the video content for that media segment. The edited version may be pre-generated (e.g., based on the metadata).

For example, the manifest file may include addresses of each of the media segments, and for some of all of the media segments, addresses for alternative media segments in which the video and/or audio content is edited (e.g., blurred, or wherein one or more regions are blurred). Requesting the alternative media segment to execute the display action may then comprise sending a content request to the address for the alternative media segment provided in the manifest file. For example, the media player (e.g., client device) may request and receive the alternative media segment from the content provider (e.g., remote server). In this way, the media device may display edited (e.g., blurred) versions of the media segments without needing to locally edit the media content during playback (e.g., live).

In these examples, the remote server may include alternative media segments for each media segment of a media content. Alternatively, the remote server may include one or more alternative media segments corresponding to media segments having a certain classification in the corresponding metadata portion. In this way, media segments determined to include sensitive content may have pre-generated alternative media segments for display.

The computer-implemented may further comprise receiving user preference information. The user preference information may be associated with the one or more categories. The display action may then be determined based on the user preference information.

The user preference information may be received from the user via a user interface. In further examples, the user information may be determined from historical user data. For example, the historical user data may include historical display actions instigated by the user during playback of other media content.

For example, the predetermined list of display actions may be a user defined list determined from the user preference information. The computer-implemented method may then comprise: receiving user preference information, the user preference information comprising a user defined list of categories; determining if the one or more categories indicated by the classifications of each media segment is included in the user defined list; and, where the one or more categories is included in the user defined list, performing the display action. For example, the display action may include skipping display of media segments associated with the categories that are in the user defined list.

Executing the display action may comprise, during playback of a media segment of the media content, automatically executing a respective display action determined based on the metadata portion describing that media segment. In some examples, the computer-implemented method may comprise, during playback of each media segment of the media content, automatically executing a respective display action determined based on the metadata portion describing that media segment. Therefore, in these examples, determining the respective display action may comprise selecting the respective display action from the predetermined list of display actions based on the extracted metadata describing that media segment.

In other examples, the display action may be a predetermined display action, wherein the method comprises determining whether (or not) to execute the predetermined display action based on the extracted metadata. For example, the computer-implemented method may comprise determining whether to skip display of a media segment depending on the classification of that media segment (as provided in the metadata portion defining that media segment).

In further examples, the computer-implemented method may comprise, during playback of the media content, detecting an upcoming media segment having a target classification indicating one or more target categories. The target classification may be defined in the control data by e.g., a user or by parental control settings etc. When an upcoming media segment associated with the target classification is detected, the computer-implemented may comprise executing the display action. The display action may be a predetermined action (e.g., defined in the control data). For example, the method may comprise, during playback of the media content, detecting one or more upcoming media segments associated with the target classification and automatically skipping playback of those media segments.

The computer-implemented method may further comprise accessing, inspecting, or retrieving the control data. The control data may comprise associations between the category and one or more respective display actions to be executed during playback of a media segment described by a metadata portion having an associated classification indicating that category. The control data may comprise associations between a plurality of categories and, for each category, one or more respective display actions to be executed. For example, the one or more display actions associated with each category may be display actions from the predetermined list of display actions. In some examples, a category may be associated with no display actions or with a display action indicating that the media segment associated with that category should be played as normal.

The computer-implemented method may comprise accessing, inspecting, or retrieving the control data once for the media content, for example, before or at the beginning of the playback of the media content. In other examples, the computer-implemented method may comprise, for each media segment, accessing, inspecting, or retrieving the control data. The computer-implemented may then comprise: determining, from the control data, whether there is a respective display action associated with the category indicated by the classification of that media segment. In response to a determination that there is a respective display action associated with the one or more categories, the method may comprise executing that display action during playback of the media segment.

The control data may comprise associations between a plurality of categories and, for each category, one or more respective display actions to be executed during playback of each media segment described by a metadata portion having a classification indicating that category. In some examples, the control data may comprise one or more categories associated with one or more (or a plurality of) respective display actions. Therefore, some categories may be associated with more than one display actions and/or some display actions may be associated with more than one category of media segment.

Where the control data includes a plurality of display actions associated with the one or more categories indicated by the classification of a media segment, then the computer-implemented method may comprise executing each of the plurality of display actions. Alternatively, the computer-implemented method may comprise executing one or more of the display actions which are determined to have a higher priority than the other display actions in the plurality of display actions.

Where the classification of a media segments indicates more than one category indicating the nature of the media content in media segment, the computer-implemented method may comprise determining a respective plurality of display actions associated with each of the categories based on the control data. The computer-implemented method may comprise executing each of the plurality of display actions. For example, the display actions may include muting and blurring a media segment. Alternatively, the computer-implemented method may comprise executing one or more of the display actions which are determined to have a higher priority than the other display actions in the plurality of display actions. The priority of the display actions may be a predetermined priority order of display actions. The control data may be predetermined. For example, the control data may be settings of the playback system which are pre-set by a service provider or by a user. In other examples, the control data may be generated based on user preference information collected from a user. For example, the user preference information may include one or more display actions that the user specifies should be performed for media segments associated with one or more of the categories. For example, the user preference information may indicate that a first of the categories should be associated with a first of the display actions in the predetermined list of display actions.

The computer-implemented method may comprise, for each media segment described by a metadata portion of the metadata (or for each metadata portion in the metadata), automatically executing a respective display action, the respective display action being determined based on: the control data, and the category indicated by the classification of the metadata portion describing that media segment.

The metadata may include one or more timestamps associated with each media segment. For example, each timestamp may describe a relative time that the respective media segment occurs in the media content. The relative time may be an elapsed time of the media content. The one or more timestamps may include a start time, an end time, and/or a duration of the respective media segment.

As mentioned above, the computer-implemented method may further comprise receiving or collecting user preference information associated with the one or more categories, wherein the display action is determined based on the user preference information. The user preference information may be used to inform the associations in the control data for determining the respective display actions for each media segment as discussed above.

In other examples, the user preference information may include an indication that a particular display action should be executed during playback of media segments which are associated with a selected one or more of the one of more categories. For example, the user preference information may indicate that all media segments which are determined to be action scenes should be muted or skipped.

In further examples, the computer-implemented method may comprise playing one or more selected media segments of the media content based on the extracted metadata and, optionally, the user preference information. For example, the computer-implemented method may comprise displaying only favourite scene types during playback of the media content based on the user preference information and the extracted metadata by skipping media segments associated with disliked categories and playing media segments associated with favoured categories. In this way, a user may be offered or shown smaller clips of popular or favourite parts of some media content (e.g., a movies or TV show) which the user can watch again quickly without needing to duplicate those parts of the media content or manually skip through the medial content.

Receiving or collecting the user preference information may include retrieving the user preference information or from a user account (collected previously using historical viewings/metadata generated for other media content).

Alternatively, the computer-implemented method may include a method for collecting user preference information, the method including, during the playback of a media segment of the media content, receiving a user input relating to that media segment, and determining user preference information associated with one or more of the categories of media content based on the user input and the extracted metadata describing that media segment. The collected user preference information may be saved in relation to a user account and/or used to generate control data for determining display actions during subsequent playback of media content (e.g., which may be the same or new media content).

The computer-implemented method may further comprise, before playback of the media content (e.g., and after extraction of the metadata), analysing the metadata to determine a proportion (or a duration) of the media content for which a display action is to be executed.

The method may then comprise displaying a notification of the determined proportion (e.g., in a pop-up notification) and receiving an indication of whether to play the media content based on the determined proportion. When a positive indication is received, the method may comprise displaying the media content and during playback of a media segment, automatically executing the one or more display actions. Alternatively, when a negative indication is received, the method may comprise recommending alternative media content or terminating playback of the media content. For example, if a proportion of the media content will be skipped has having a certain classification, then a user may provide a negative indication indicating that they do not wish to proceed with the play back.

If the determined proportion (or duration) exceeds a predetermined threshold proportion (or proportion, the method may comprise generating an alert. For example, generating the alert may include displaying a notification indicating that the proportion has exceeded the predetermined threshold. For example, the threshold may be 20%, or 10% of a total duration of the media content. In this way, a user may determine if, for example, a media content contains too much sensitive content which will be e.g., skipped or edited and choose to play something else.

In some examples, the computer-implemented method may comprise displaying (or playing) further media content identified based on the extracted metadata. For example, the further media content may include a pop-up notification, or an advertisement identified based on the metadata, etc. That is, the further media content may be identified based on the one or more categories indicated by the classifications of the media segments in the media content. In some examples, the further media content may be identified based on user preference information. The further media content may be identified and/or displayed before, during, or after playback of the entire media content.

The further media content may comprise a targeted advertisement which is determined based on the extracted metadata. The computer-implemented method may therefore comprise identifying a targeted advertisement for display based on the one or more categories of the media segments in the media content. For example, if the media content contains more than a threshold number of media segments associated with a particular category, then a targeted advertisement may be identified based on that category. In further examples, the targeted advertisement may be identified based on user preference information which indicates preferred display actions associated with the one or more categories. For example, when the user preference information indicates that media segments associated with a first category (e.g., intimate scenes) should be skipped, muted, or blurred out and that segments associated with a second category (e.g., comedy scenes) should be played or saved, then the computer-implemented method may comprise avoiding targeted advertisements associated with the first category and identifying targeted advertisements associated with the second category.

In other examples, the further media content may include other types of media content, such as films, TV, videos, music, music videos etc, which is identified based on the one or more categories in the media content and, optionally, user preference information. In these examples, the computer-implemented may comprise displaying a notification to a user recommending the further media content. In some examples, the further media content may include one or more media segments of the media content selected based on the extracted metadata and, optionally, the user preference information. In this way, a user may be offered/recommended clips of popular or favourite parts of movies or TV shows which user can watch again, quickly without needing to manually skip through.

The classification of each media segment in each metadata portion of the metadata may be determined based on a first classification determined based on the video content of the media segment; and a second classification determined based on the audio content of the media segment. The classifications of the media segments being determined based on separate classifications of the video and audio content provides more accurate determinations of the nature of the media segments and so enables improved control of the media playback.

For example, some media content may contain video content which is classified as containing PG content suitable for children whereas the corresponding audio content may contain explicit language which is not suitable for children. In other examples, the opposite may be true. Thus, by considering both types of content in each media segment, a more accurate assessment of the nature of the media segment and a more suitable determination of the display action may be achieved.

The metadata may be (or may have been) generated using a computer-implemented method for generating metadata. The computer-implemented method for generating metadata may comprise: dividing the media content into a plurality of initial media segments. For example, each initial media segment may comprise a predetermined duration of the media content (e.g., 1 second, 10 seconds, or 100 seconds) or a predetermined quantity of data which forms the media segment (e.g., in Megabytes). "Duration" herein is intended to refer an elapsed playback time of the media content when it is being played at an intended playback rate (i.e., frame rate).

The computer-implemented method for generating the metadata may further comprise: applying a first machine-learning model to the video content of each initial media segment, the first machine-learning model being configured to output the first classification for the video content in each initial media segment; applying a second machine-learning model to the audio content of each media segment, the second machine-learning model being configured to output the second classification for the audio content in each initial media segment; and combining the first and second classifications to generate the classification of each initial media segment. The method may then comprise forming the metadata based on the determined classifications.

The first machine-learning model for classifying the video content may include a neural network such as a CNN (Convolutional Neural Network). The first machine-learning model may be an image classifier. The image classifier may be configured to receive video frames of the video content as input data and generate one or more outputs classifying the video frames into one or more categories depending on the nature of the content in the video frames. For example, each output may include one or more confidence scores indicating a likelihood that the content of a video frame relates to a particular one of the media categories.

The second machine-learning model for classifying the audio content may be a may include a neural network. For example, the second machine-learning model may be a classifier including a language processing model, an MLP (multilayer perceptron network), a CNN, or any other suitable machine learning model for classifying audio.

In some examples, determining the second classification may comprise: receiving or generating a transcript of the audio content and applying the second machine-learning model to the transcript. The transcript may be a digital file containing text representing speech or other sounds which can be heard in the audio content. Accordingly, in this example, the second machine learning model may be a text processing model which is configured to receive text as an input and generate the second classification based on the text.

In some examples, a transcript may be received for the audio content of each media segment thereby providing a plurality of transcripts corresponding to the media segments. In other examples, the received transcript may be divided into transcript segments thereby providing a plurality of transcripts corresponding to the media segments. The method may then comprise applying the second machine-learning model each of the plurality of transcripts to generate a plurality of second classification for each media segment.

The second machine-learning model may be a retrained model for classifying the audio content based on a specific language spoken in the media content. That is, an initial machine learning model for classifying text may undergo additional training (e.g., transfer learning) to classify a specific language. Accordingly, the computer-implemented method may comprise a step of determining a specific language spoken in the audio content and selecting a pretrained machine learning model from a plurality of machine-learning models as the second machine-learning model for classifying the audio content.

Receiving the transcript may comprise using a speech-to-text generator to generate the transcript from the audio content (or to generate the plurality of transcripts from each segment of the audio content). In other examples, the transcript may be received from a source of the media content. For example, the transcript may be subtitles associated with the media content.

Combining the first and second classifications may comprise: for each media segment, determining whether the first classification is the same as the second classification. Further, in response to a determination that the first classification is not the same as the second classification, the method may comprise using the second classification as the classification for that media segment. In some examples, one or more media segments of the audio content may be determined to have no language, wherein audible speech is not present. For these segments, the computer-implemented method may comprise using the first classification as the classification for these media segments.

Forming the metadata may comprise generating one or more metadata portions describing each initial media segment and the generated classification of that media segment. Therefore, in this example, the initial media segments may form the media segments defined in the metadata. In other examples, forming the metadata may comprise generating one or more metadata portions describing a selection of the initial media segments and the generated classifications for the selected initial media segments. For example, the selected media segments may be initial media segments which have been determined to contain content which was classified into one or more particular categories. For example, forming the metadata may comprise generating one or more metadata portions describing each initial media segment that is determined to contain adult content and/or explicit language.

The computer-implemented method for generating the metadata may further comprise: analysing the classification of each initial media segment; and where a plurality of adjacent initial media segments have a same classification, grouping those adjacent initial media segments to form a single media segment. Forming the metadata may then comprise generating a metadata portion with an associated classification describing each of the plurality of adjacent initial media segments in the single media segment. That is, forming the metadata may comprise combining initial media segments which are adjacent to each other, and which are determined to contain content in the same category and then generating one or more metadata portions which describe the combined initial media segments and the generated classification associated with those initial media segments. Therefore, in this example, one or more of the media segments which are defined by the metadata may refer to a combination of initial media segments having the same classification. Additionally, the method may comprise determining a timestamp indicating a start time and an end time and/or a duration of the single media segment that is formed from the plurality of adjacent media segments.

In a second aspect of the present invention there is provided a system for displaying media content according to the computer-implemented method of the first aspect, the media content comprising video content and corresponding audio content, and the system comprising:
a metadata processing module for extracting metadata from the media content, the metadata comprising one or more metadata portions, each metadata portion describing a respective media segment of a plurality of media segments of the media content, and comprising a classification of the respective media segment, the classification indicating one or more categories related to the nature of the media content in the media segment; and
a playback module for playing the media content and, during playback of the media content, automatically executing a display action, the display action determined based on the extracted metadata,
wherein the classification of each media segment is determined based on a first classification determined based on the video content of the media segment; and a second classification determined based on the audio content of the media segment.

In a third aspect of the present invention there is provided a computer-implemented method of generating metadata for media content, the media content comprising video content and corresponding audio content, wherein computer-implemented method comprises:
dividing the media content into a plurality of initial media segments;
applying a first machine-learning model to the video content of each media segment, the first machine-learning model being configured to output a first classification for the video content in each segment;
applying a second machine-learning model to the audio content of each media segment, the second machine-learning model being configured to output the second classification for the audio content in each segment; and
combining the first and second classifications to generate a classification (e.g., an overall classification) of the media segment. The classification, and the first and second classifications, may be an indication of one or more categories related to the nature of the media content in the media segment.

Advantageously, the present inventors have found that combining the results from a first machine learning model which operates on the video content with the results from a second machine-learning model which operates on the audio content provides a more accurate overall classification of the media content that existing tools.

The computer-implemented method of the third aspect may additionally comprise any of the aforementioned optional features described above in relation to the first aspect.

In a fourth aspect of the present invention there is provided a system for generating metadata for media content according to the computer-implemented method of the third aspect, the media content comprising video content and corresponding audio content, and the system comprising: a media processing model configured to divide the media content into a plurality of media segments; a first machine-learning model configured to output a first classification for the video content in each media segment; a second machine-learning model configured to output a second classification for the audio content in each media segment; and a model results analysis module configured to combine the first and second classifications to generate a classification (e.g., an overall classification) of the segment. The classification, and the first and second classifications, may be an indication of one or more categories related to the nature of the media content in the media segment.

In a fifth aspect of the present invention there is provided a computer program product comprising instructions, which when executed by a computer, cause the computer to perform the computer-implemented method of the first or third aspects.

In a sixth aspect of the present invention there is provided a computer-readable medium comprising the computer program product of the preceding aspect.

Additional aspects of the invention may relate to systems configured to execute the computer-implemented method of any one of the first and third aspects of the invention. Specifically, the system may comprise a processor which is configured to execute the respective computer-implemented methods of the first and third aspects of the invention.

The invention includes the combination of the aspects and preferred features described except where such a combination is clearly impermissible or expressly avoided.

### SUMMARY OF THE DRAWINGS

Embodiments illustrating the principles of the invention will now be discussed with reference to the accompanying figures in which:
Fig. 1 shows a system for displaying media content according to aspects of the present invention;
Fig. 2 shows a high-level flow diagram for a method of displaying media content according to aspects of the present invention;
Fig. 3 shows a more detailed flow diagram for a method of displaying media content according to aspects of the present invention;
Fig. 4 shows an example of control data for use in the methods of the present invention;
Fig. 5 shows a flow diagram for method for generating metadata for media content according to aspects of the present invention; and
Fig. 6 shows an example system for generating metadata.

### DETAILED DESCRIPTION OF THE INVENTION

Aspects and embodiments of the present invention will now be discussed with reference to the accompanying figures. Further aspects and embodiments will be apparent to those skilled in the art. All documents mentioned in this text are incorporated herein by reference.

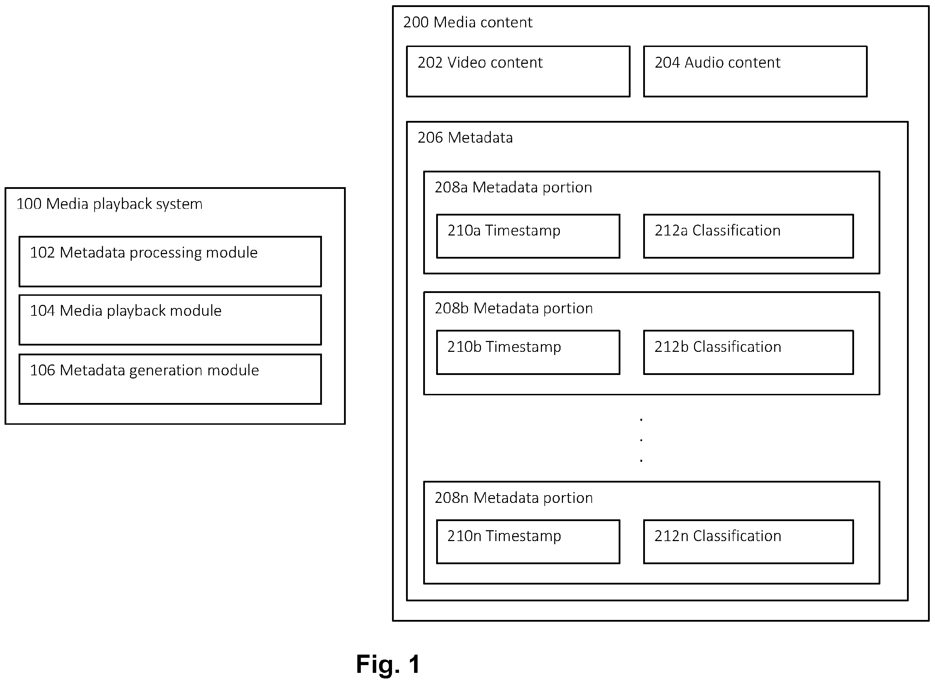

Fig. 1 shows a system 100 for displaying media content 200. The media content 200 comprises video content 202 and corresponding audio content 204. For example, the media content 200 may be a movie, TV show, or video clip received over the internet by a client device using a streaming service.

Additionally, the media content 200 comprises metadata 206 containing information about the media content 200. In particular, the metadata 206 comprises one or more metadata portions 208n (three shown), each metadata portion 208n describing a respective media segment of the media content 200. Each media segment is a section of the video content 202 and the corresponding audio content 204, wherein the media content 200 is divided into a plurality of media segments. Each metadata portion contains one or more timestamps 210n defining a relative start time, and/or an end time, and/or a duration of the respective media segment in the media content 200.

Additionally, each metadata portion 208n comprises a classification 212n for the respective media segment. The classification 212n indicates one or more categories relating to the nature of the content in the media segment. For example, the categories may include a genre, age category, or type of activity in the media segment such as "action", "comedy", "romance", "adult scene", "explicit language", "violence", "NC-17", etc. The classification 212n of each media segment is determined based on a combination of a first classification which is determined based on the video content 202 of the media segment; and a second classification which is determined based on the audio content 204 of the media segment.

In some examples, the metadata 206 and each metadata portion 208n may comprise additional information about the respective media segment such as a title, a description of the content, an overall genre for the media content, and/or a URL providing a link to a thumbnail (i.e., an image) from the respective media segment or media content 200.

The system 100, which may be implemented, for example, on a media player hosted on a computer, server or smart TV, comprises a metadata processing module 102 for receiving and extracting the metadata 206 from the media content 200, and a media playback module 104 for playing the media content 200. During playback of the media content 200, the playback module 104 is configured to determine a display action based on the extracted metadata 206 from the metadata processing module 102 and automatically execute the display action. Optionally, the system 100 may also comprise a metadata generation module 106 for receiving media content 200 and generating the metadata 206.

Herein, the term "module" is used to refer to a functional module which is configured or adapted to execute a particular function. The modules may be implemented in hardware (i.e. they may be separate physical components within a computer), in software (i.e. they may represent separate sections of code, which when executed by a processor, cause the processor to perform a particular function), or in a combination of both.

The media content 200 may be received, by the media player, from a media content provider located on a remote server. This may include initially providing, by the media player, an authentication token to the remote server to authenticate the media player. In particular, the media player may initially receive a manifest file containing network addresses of each media segment located on the remote server. The media player can then playback the media content 200 by requesting each media segment from the corresponding address provided in the manifest file. Additionally, the media player can fast forward through the media content 200 and/or skip media segments by fast forwarding through the addresses without requesting one or more of the media segments.

In some examples, the metadata 206 may be provided as part of the manifest file. The media player can then check the classification of each media segment and then request the media segment, or not, from the remote server depending on the classification.

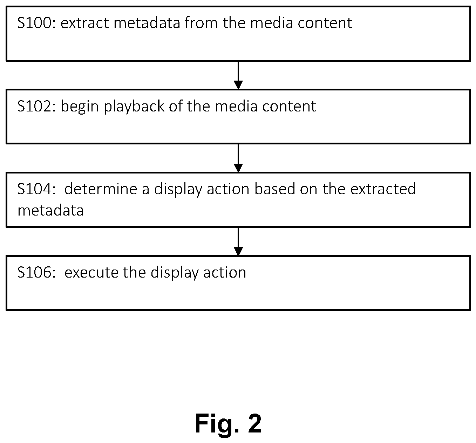

Fig. 2 shows a high-level flow diagram of a method for displaying media content 200 according to aspects of the present invention.

First, in step S100 the metadata processing module 102 extracts the metadata 206 from the media content 200. For example, this may comprise examining a digital file in which the media content 200 is contained and identifying text (e.g., in JSON format) in the digital file which forms the metadata 206.

Next, in step S102 the media playback module 104 begins playback of the media content 200. In step S104 the media playback module 104 then determines a playback action (i.e., a display action) based on the extracted metadata 206. Finally, in step S106 the media playback module 104 executes the playback action. The playback action is an adjustment to the content being displayed by the media playback module 104 beyond the media content 200 as originally received. For example, the playback action may include one or more of: skipping one or more media segments, editing the video content 202 (e.g., to blur it), or editing the audio content 204 (e.g., to mute it).

When the display action includes blurring of the video content, the blurring of the video content may be performed locally by the media player.

For example, to perform the blurring locally, the media player may use a scaler to downscale the video content of the media segment. The operation of downscaling may be performed by determining an average pixel value of the respective light intensity and/or colour for one or more portions (e.g., blocks) of the video content. A block may be a collection of pixels, such as for instance 16x16 pixels. Each average would result in 1 pixel in the downscaled media content. The scaler is further configured to upscale the resolution of the downscaled media content. The displayed resolution can be restored to the initial resolution, wherein the average pixel value is used to populate each pixel of the respective block. The specific pixel values of the pixels in the block are lost, whereby a high-resolution image with low resolution information is achieved.

Alternatively, the media player may request an alternative media segment comprising the pre-generated blurred scene e.g., by extracting an address of the alternative media segment provided in the manifest file. In this way, the media player need not perform a blurring function live during playback which could be resource consuming and require specialist resources. Accordingly, a more complex blurring function may be performed to generate the pre-generated blurred media segments than blurring functions which may be used by the media player during playback. However, the downscaling operation discussed above may also be used to generate the alternative media segment.

In another example, the blurring can be performed by overlaying an image with a given transparency value. Hence, the overlaying image is non-transparent (i.e. opaque) thereby providing a faded or obscured version of the video content. This image may look like a milky frame on the display. This media player can then display the faded or obscured version of the video content during playback of that media segment which was marked for blurring. Optionally, the transparency value of the overlayed image can be adjusted based on an average intensity and/or colour of the pixels of the images forming the video content of the media segment which was marked for blurring.

As discussed in more detail below, determining the playback action may include inspecting system settings or user preferences to determine a playback action which is associated a particular category. For example, the settings or user preferences may indicate that media segments categorised as "NC-17" should be skipped or blurred.

The playback module 104 may be configured to determine and execute a respective display action for each media segment of the media content 200 based on the respective metadata portion describing that media segment and control data comprising associations between the categories indicated in the metadata 206 and one or more respective playback actions. In some examples, further media content may be identified and displayed based on the metadata as a whole. For example, the further media content may include a pop-up with a recommendation for further media content or the display of further media content identified based on the metadata, such as a targeted advertisement, a further video, a music track, etc.

In further examples, the playback module 104 may be configured to, before playback of the media content, determine an amount (e.g., proportion or duration) of the media content 200 which is expected to be adjusted by one or more playback actions. If the amount exceeds a predetermined threshold, then the playback module 104 may display a pop-up notification asking a user if they wish to continue. Therefore, if a large proportion of the media content 200 is going to be e.g., skipped or blurred, because it contains e.g., sensitive content then the user may choose to watch something else instead.

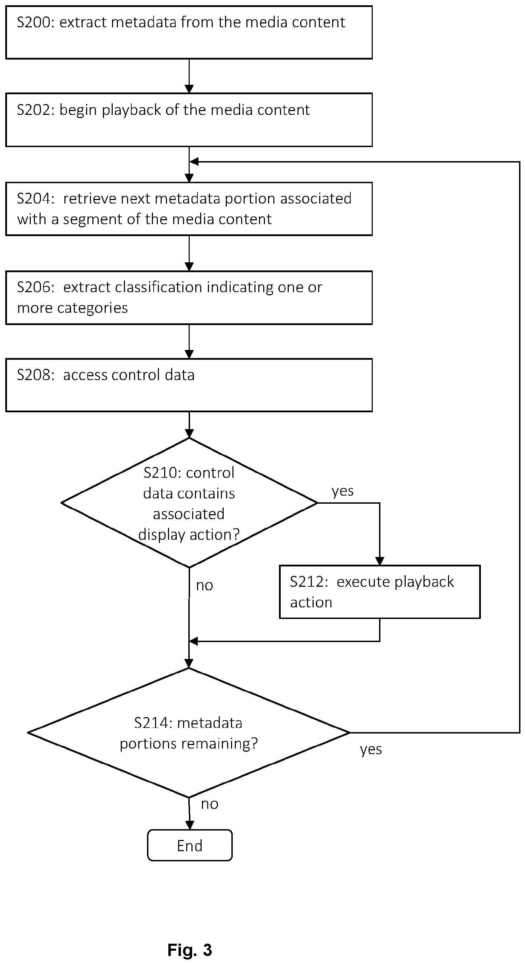

Fig. 3 shows a more detailed flow diagram of a method of displaying media content 200.

In step 200 the metadata 206 is extracted from the media content 200 and in step S202 the playback module 104 begins playback of the media content 200 as described above for Fig. 2. Next, in step 204, during playback of the media content 200, the first metadata portion 208a of the metadata 200 is extracted and inspected to determine when the associated media segment defined in the first metadata portion 208a is going to be played. Additionally, in step 206 the classification 212a of the associated media segment is extracted from the metadata portion 208a to determine one or more categories relating to the content of that media segment.

Next, in step S208 the playback module 104 accesses or retrieves control data associated with the playback module 104 and/or the media content 200. The control data lists each of the one or more categories, and for each category, one or more respective display actions to be executed during playback of a media segment having an associated classification 208n indicating that category. For example, control data may be accessible for a particular media content or for a particular media playback module 104 or a user account associated with the media playback module 104. The control data may be predetermined control data or generated based on user preference information collected from a user.

In step S210, the media playback module 104 determines from the control data if one or more respective display actions are associated with the categories indicated by the classification in the current metadata portion 208a. If there is no respective display action associated with the one or more categories, then the process proceeds without executing a display action. However, if one or more display actions are listed in the control data for the one or more categories, then the process proceeds to step S212 where the one or more respective playback actions are executed for the media segment which is defined in the present metadata portion 208a.

For example, to execute the one or more display actions the playback module 104 may determine, from the timestamp 210a in the metadata portion 208a, when the respective playback action(s) should be executed. For example, if the respective playback action is to skip the media segment, then the playback module 104 will determine when the playback of the media content 200 has reached a start time of that media segment and then jump to a section in the media content 200 corresponding to an end time of the media segment.

Finally, in step S214 the playback module 104 determines if there are unprocessed metadata portions 208n remaining in the metadata 206 or if playback of the media content 200 is finished. If there are additional meta portions 208n remaining, then the process returns to step S204 to retrieve and analyse the next metadata portion 208n. Steps S204 to S214 are then repeated until the metadata portions 208n have all been analysed or playback of the media content 200 is complete.

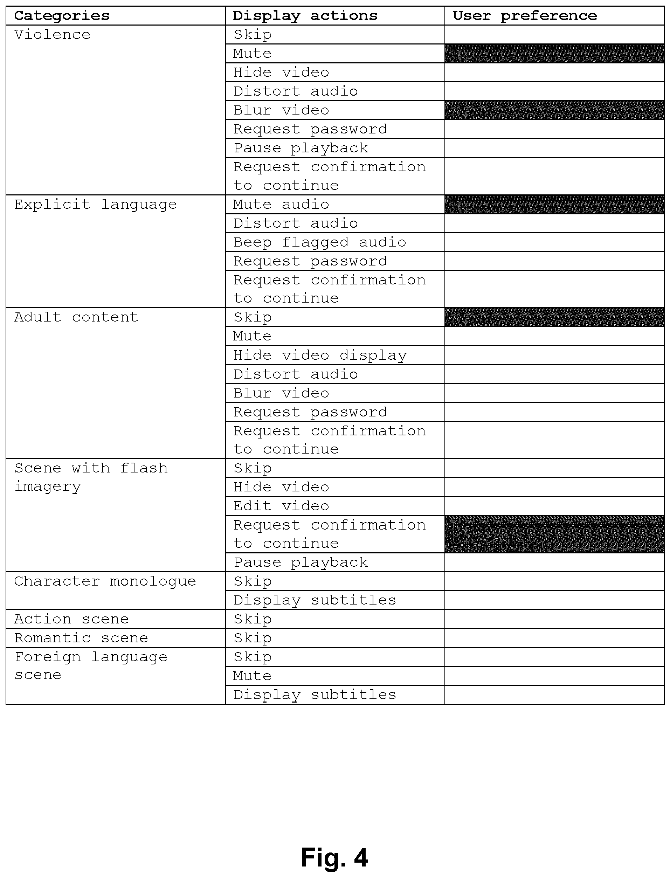

Fig. 4 shows an example table containing control data for determining playback actions to perform for each category of media content 200. The first column of the table contains categories of media content 200 which may be defined in the classifications 212 of each metadata portion 208n. The second column contains a list of one or more playback actions which may be executed for each category. In this example, one or more (or zero) playback actions from each list has been selected according to user preference information in the third column. In the example shown, the selected playback actions are indicated by a shaded box in the third column indicating a user's preference. For example, looking at the first row, if a media segment (e.g., a scene in a movie) is indicated by the classification 212n as containing violent content, then the audio content 204 of that segment is muted and the video content 202 of that segment is blurred. Media segments with associated categories for which there is no associated playback action, or for which no associated playback action is selected using the user preference information, can be displayed as normal by the media playback module 104.

As the skilled person would understand, the control data may be provided in other forms to that shown in Fig. 4. For example, the control data may simply be a flag in software which can be enabled or disabled to enable or disable the skipping of certain types of media segments.

The user preference information may be received from a user prior to playback of the media content 200. For example, the process described above may include an additional step of receiving a user input indicating which playback actions for which categories they wish to be executed, or a user input turning on (or off) parental controls. In other examples, the user preference information may be retrieved from predetermined settings of a user account which is associated with the media playback module 104.

As mentioned above, the classification 212n of each metadata portion 208n, which includes one or more categories of a respective media segment, is generated from a first classification based on the video content 202 of the media segment and a second classification based on the audio content 204 of the media segment. This ensures that a more accurate assessment of the content in each media segment is performed than traditional method which may, for example, analyse only images from the media content 200.

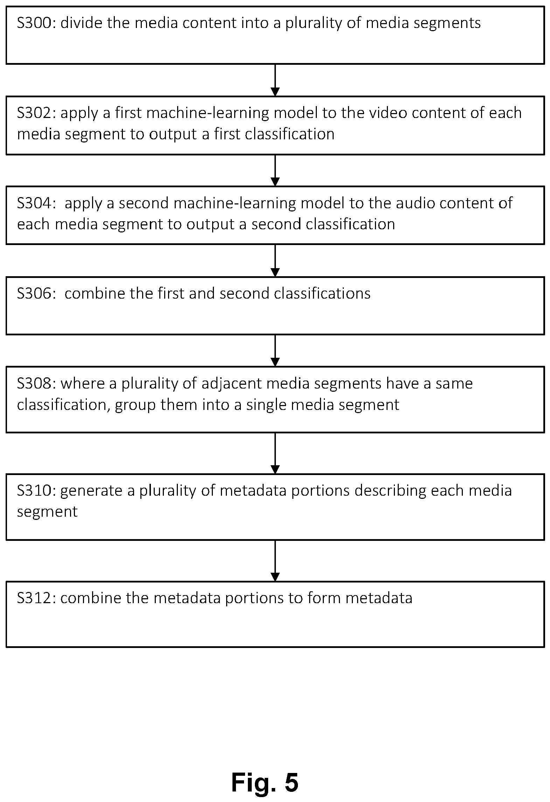

Fig. 5 shows a high-level flow diagram of a process for generating metadata 206 from the media content 200. For example, the process may be performed by a metadata generation module 106 of the media playback system 100. The metadata generation may be performed on a client side which receives the media content 200 e.g., over the internet from a third party provider. Alternatively, the metadata 206 may be generated at server side for new media content, as well as older media contents, and can be received by client devices with the corresponding media content 200.

First, in step S300 the media content 200 is divided into a plurality of initial media segments. For example, each initial media segment may comprise a 2 second sample of the audio 204 and video 202 content.

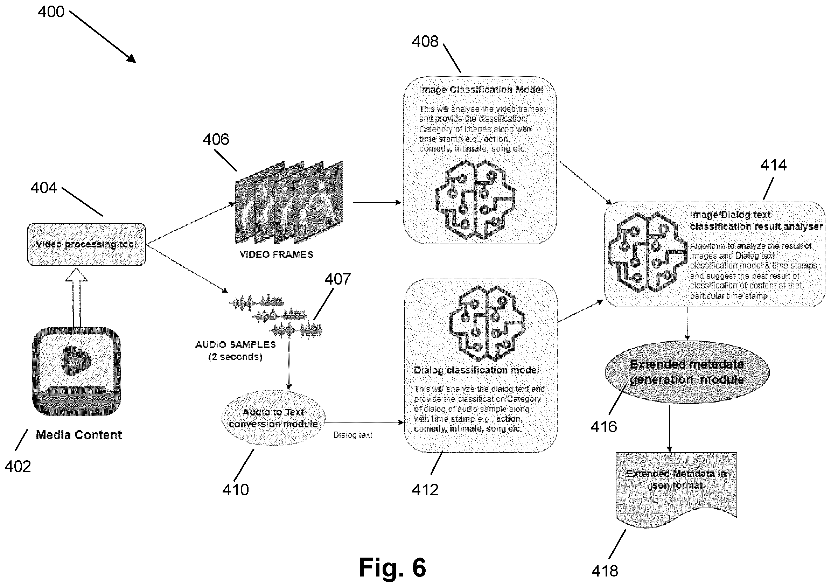

In step S302 a first machine-learning model is applied to the video content 202 of each media segment to output a first classification of each segment. The first classification may include one or more categories indicating the nature or rating of the respective video content 202. As discussed below in relation to Fig. 6, the first machine-learning model may be an image classifier, wherein applying the image classifier to the video content 202 includes providing each video frame of the respective media segment as input data to the image classifier. The image classifier then outputs a classification of the content in each video frame. In some examples, the output of the image classifier may be in the form of a likelihood or confidence score for each of a plurality of categories. The classifications for each video frame are then combined to generate a first classification of the video content 202 in each media segment.

In step S304 a second machine-learning model is applied to the audio content 204 for each media segment to output a second classification indicating one or more categories relating to the nature of the audio content 204. As discussed below in relation to Fig. 6, applying the second machine learning model may optionally comprise performing audio-to-text conversion on the audio content to generate a transcript. The second machine learning model may be a classifier which is configured to receive the audio content itself or the transcript as input data. The classifier then outputs a classification of the audio content 202 in the media segment indicating one or more categories relating to the nature of the content. In some examples, the output of the classifier may be in the form of a likelihood or confidence score for each of a plurality of categories.

Next in step S306 the first and second classifications for each initial media segment are combined to generate an overall classification for one or all of the initial media segments. This step includes determining if the first and second classifications are the same or not. If the first and second classifications are the same, then the overall classification is determined to be the first and second classifications. Alternatively, if the first and second classifications are not the same, and there is a classification provided for the audio content (e.g., if there was sound and/or speech in the audio content for that media segment) then the overall classification is be set to be the second classification. In other methods, the first and second classifications may be combined based on the confidence scores output from the machine-learning models. In some examples, where the first and/or second classifications indicate a plurality of likely categories associated with the media segment then the classification may indicate that plurality of categories. For example, a media segment may contain content which is violent and contain explicit language.

Notably, some media segments may not have a classification, or the classification may indicate that the content of the media segments does not relate to any categories of interest. For example, such a classification may be determined if the confidence scores for each of the categories, for the video content and the audio content, are below a predetermined threshold indicating that it is unlikely that any of the categories are relevant to the respective media segment.

Next in step S308 the process comprises optionally combining initial media segments which are adjacent to each other, and which have the same classifications, into a single media segment.

In step S310 the metadata generator 106 generates one or more metadata portions 208n for each of the media segments. A metadata portion 208n is generated for each initial media segment and/or combined initial media segments which have a classification indicating that one or more of the categories are relevant to that media segment. Accordingly, each metadata portion describes a media segment of a variable length depending on how many initial media segments were combined.

Generating each metadata portion 208n comprises determining one or more timestamps 210n indicating the position or time of the media segment in the media content 200. The one or more timestamps 210n, and optionally a duration, of each media segment is converted to a text format for forming the metadata portions 208n. Additionally, the generated classification 212n for each media segment is included in the metadata portions 208n, for example, as a text descriptor or a number representing a category etc. Optionally, each metadata portion 208n may also be assigned additional information associated with each media segment such as a title, a URL providing a link to an image from that media segment, a description of the media segment, etc.

Finally, in step S312, the metadata portions 208n are combined to form the metadata 206 which is optionally embedded in a digital file containing the media content 200. For example, as mentioned above, the metadata 206 may be in the JSON format or another XML format. Fig. 6 shows an example system 400 for generating metadata 418 according to the method of Fig. 5. In this example, the metadata 418 (referred to as extended metadata) is provided in JSON format.

The system 400 comprises a video processing tool 404 which is configured to receive media content 402, for example, OTT media content received over the internet, for which the metadata 418 is to be generated. The video processing tool 404 is configured to process the received media content 402 and extract video frames 406 and audio samples 407 (e.g., 2 seconds long) which make up the video and audio content of the media content 418. For example, the video processing tool 404 may be FFMPEG ¹ or any other video content processing tool. Additionally, the video processing tool 404 is configured to generate associated time information corresponding to the extracted video frames 406 and audio samples 407.

The system 400 comprises an image classification model 408 which forms a first machine learning model for classifying the video content as mentioned above. The image classification model 408 is configured to receive the video frames 406 (along with the time information) as input data and suggest a classification of each video frame as an output e.g., if a video frame 406 belongs to a comedy scene, then the video frame (and the associated time information) will be classified as "Comedy". For example, the image classier may be a Convolutional Neural Network (CNN) which is trained to classify images by genre or age category. The image classifier may be trained using training data including labelled scenes from movies or pre-generated metadata (e.g., manually generated metadata) including classifications of the images. The model can then learn how to classify the images according to the previously generated classifications.

Furthermore, the system 400 comprises an audio to text conversion module 410 which is configured to receive the audio samples 407 as input data and output text (i.e., a digital transcript) representing speech or other sounds which can be detected in those audio samples 407.

The system comprises a second machine learning model which is an audio classification model 412 for generating the second classification indicating one or more categories of the audio samples 407. In this example, the audio classification model 412 is a dialog classification model which is configured to receive the text corresponding to each audio sample 407 from the audio-to-text conversion module 410 and the associated time information as inputs and produce a dialog classification indicating one or more categories of the media content 402. The audio classification model 412 is trained by providing audio samples 407 and pre-generated classifications of those audio samples 407 to the model 412.

Next, the system 400 comprises an Image/Dialog classification model result analyser 414 which is configured to analyse the classifications and, optionally, the likelihood scores from the first 408 and second 412 machine-learning models to generate an overall classification for each media segment as indexed by the timing information.

If the overall classification result for multiple video frames 406 and audio samples 407 forming media segments are the same then the classification model result analyser 414 is configured to group those video frames 406 and audio samples 407 together into a media segment having a single classification indexed by the associated timing information (e.g., having a start time, end time, and/or duration). For example, if the determined classifications for the 10th, 11th, 12th, 13th and 15th seconds are the same (e.g., comedy classification) then the classification result analyser 414 will consider the media content from the 10th to 15th seconds as a single media segment, e.g., a comedy group, and update the resulting metadata 418 to reflect this. For example, a single metadata portion will be generated for the that single media segment representing the 10^{th} to 15^{th} seconds.

Finally, the system 400 comprises an extended metadata generation module 416 which is configured to generate metadata portions comprising the time information and classifications determined for each media segment. The metadata portions are combined, optionally with additional information about the media content to form extended metadata 418.

The following shows an example of metadata in JSON (JavaScript Object Notation) format for media content comprising a movie. Each metadata portion is indicated in the following example by brackets {}. JSON is one example format for the metadata. However, other formats may also be used.

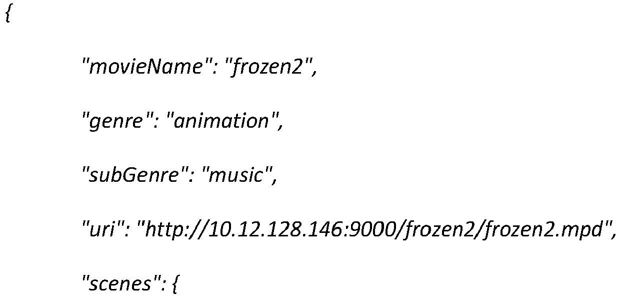

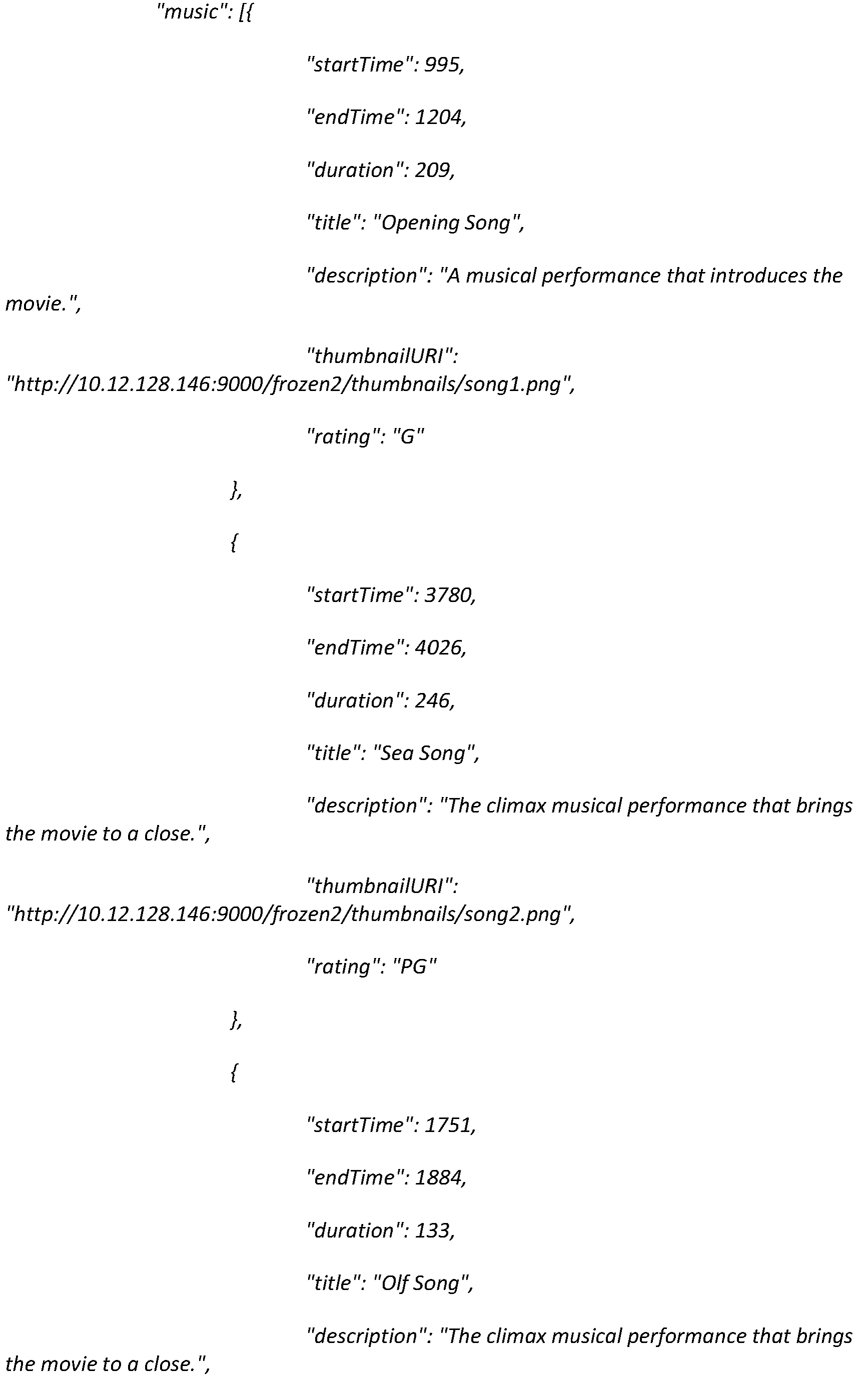

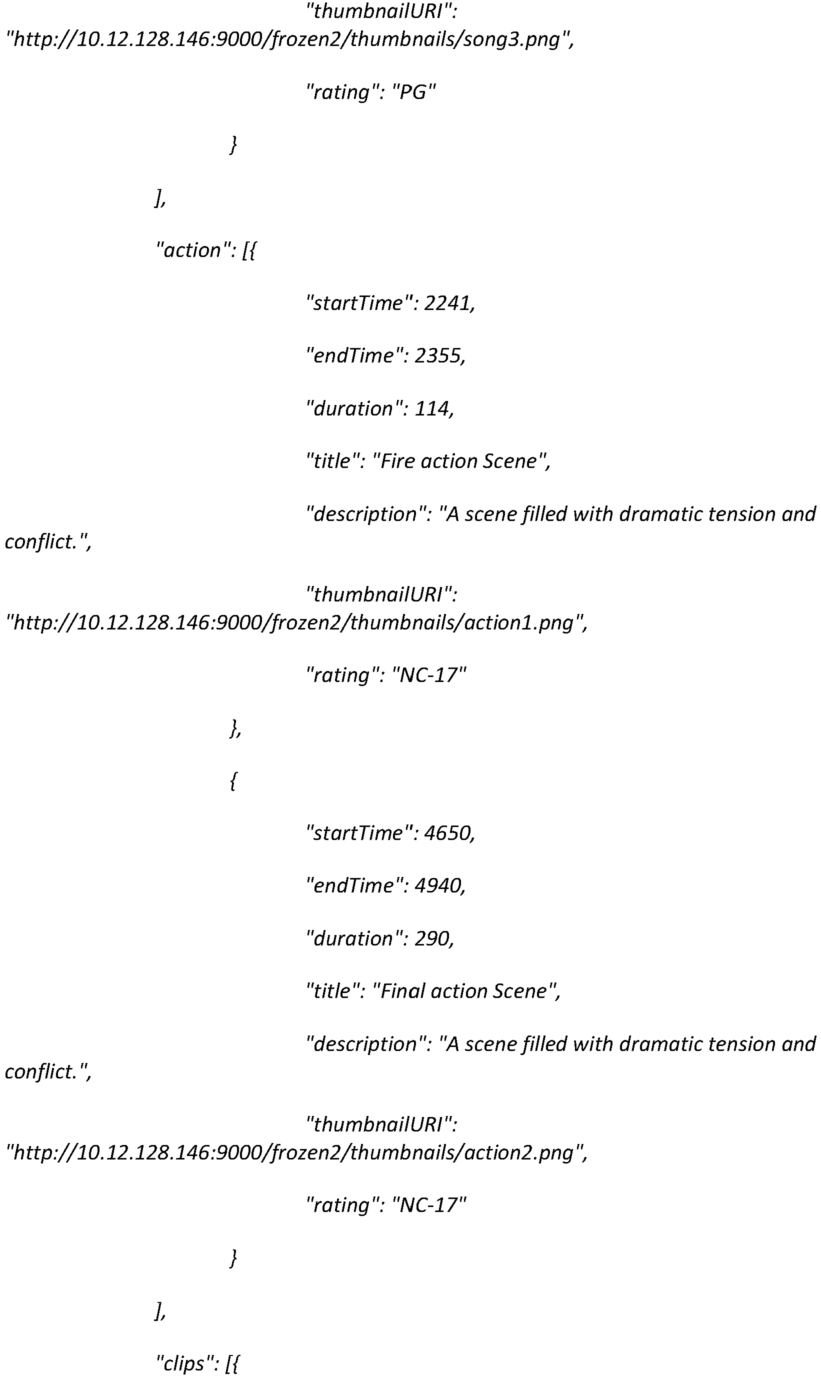

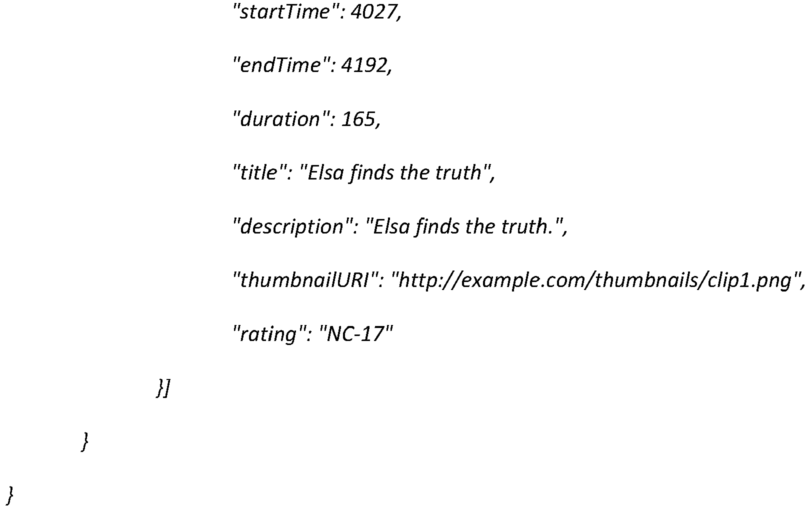

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method of displaying media content, the media content comprising video content and corresponding audio content, wherein the method comprises:
extracting metadata from the media content, the metadata comprising one or more metadata portions, each metadata portion describing a respective media segment of a plurality of media segments of the media content, and comprising a classification of the respective media segment, the classification indicating a category related to the nature of the media content in the media segment; and
during playback of a media segment of the media content, automatically executing a display action, the display action determined based on:
(i) the category indicated by the classification of the metadata portion describing that media segment; and
(ii) control data comprising an association between the category and a respective display action.

2. The computer-implemented method of claim 1 wherein the display action comprises one or more of:
automatically skipping the display of a media segment;
editing or modifying the video content and/or audio content of a media segment;
ceasing display of the video content for a media segment; and
muting production of the audio content for a media segment.

3. The computer-implemented method of claim 1 or claim 2, wherein:
the control data is predetermined; or
the control data is generated based on user preference information collected from a user.

4. The computer-implemented method of any preceding claim, wherein:
the control data comprises associations between a plurality of categories, and for each category, one or more respective display actions to be executed during playback of each media segment described by a metadata portion having a classification indicating that category.

5. The computer-implemented method of any preceding claim, wherein automatically executing the respective display action for the media segment comprises:
determining, from the control data, whether there is a respective display action associated with the category indicated by the classification of that media segment; and
in response to a determination that there is a respective display action associated with the category, executing that display action.

6. The computer-implemented method according to any preceding claim further comprising:
for each media segment described by a metadata portion of the metadata, automatically executing a respective display action, the respective display action being determined based on: the control data, and the category indicated by the classification of the metadata portion describing that media segment.

7. The computer-implemented method of any one of claims 1 to 6, wherein:
the metadata includes one or more timestamps associated with each media segment, wherein each timestamp describes a relative time that the respective media segment occurs in the media content.

8. The computer-implemented method of any preceding claim, wherein executing the determined display action comprises retrieving a pre-processed version of the media segment for playback.

9. The computer-implemented method of any preceding claim, further comprising:
analysing the metadata to determine a proportion of the media content for which one or more display actions is to be executed, and
if the determined proportion exceeds a predetermined threshold proportion, generating an alert.

10. The computer-implemented method of any preceding claim, further comprising:
displaying further media content identified based on the extracted metadata.

11. The computer-implemented-method of any one of claims 1 to 10, wherein:
the classification of each media segment is determined based on a first classification determined based on the video content of the media segment; and a second classification determined based on the audio content of the media segment.

12. The computer-implemented method of claim 11 wherein the metadata has been generated using a computer-implemented method comprising:
dividing the media content into the plurality of media segments, and
applying a first machine-learning model to the video content of each media segment, the first machine-learning model configured to output the first classification for the video content in each media segment;
applying a second machine-learning model to the audio content of each media segment, the second machine-learning model configured to output the second classification for the audio content in each media segment; and
combining the first and second classifications to generate the classification of the segment.

13. The computer-implemented method of claim 12 wherein determining the second classification comprises:
receiving a transcript of the audio content, and applying the second machine-learning model to the transcript.

14. The computer-implemented method of any one of claims 11 to 13 wherein the computer-implemented method used to generate the metadata further comprises:
analysing the classification of each media segment; and
where a plurality of adjacent media segments have the same classification, grouping those adjacent media segments to form a single metadata portion with an associated classification describing each of the plurality of adjacent media segments.

15. A computer program product comprising instructions, which when executed by a computer, cause the computer to perform the computer-implemented method of any preceding claim.

## Amended claims

### Amended claims in accordance with Rule 137(2) EPC.

1. A computer-implemented method of displaying media content (200), the media content (200) comprising video content (202) and corresponding audio content (204), wherein the method comprises:
extracting (S100) metadata (206) from the media content (200), the metadata (206) comprising one or more metadata portions (208a-208n), each metadata portion (208a-208n) describing a respective media segment of a plurality of media segments of the media content (200), and comprising a classification (212a-212n) of the respective media segment, the classification (212a-212n) indicating a category related to the nature of the media content (200) in the media segment;
receiving user preference information associated with one or more categories; wherein the user preference information may include one or more display actions that the user specifies to be performed for media segments associated with one or more of the categories and
during playback of a media segment of the media content (200), automatically executing (S106) the one or more display actions, the display action determined based on:
(i) the category indicated by the classification of the metadata portion (208a-208n) describing that media segment;
(ii) control data comprising an association between the category and the one or more respective display actions and
(iii) the user preference information;
wherein the display action comprises one or more of:
automatically skipping the display of a media segment;
editing or modifying the video content and/or audio content of a media segment;
ceasing display of the video content for a media segment; and
muting production of the audio content for a media segment.

2. The computer-implemented method of claim 1, wherein:
the control data is predetermined; or
the control data is generated based on user preference information collected from a user.

3. The computer-implemented method of any preceding claim, wherein:
the control data comprises associations between a plurality of categories, and for each category, one or more respective display actions to be executed during playback of each media segment described by a metadata portion (208a-208n) having a classification indicating that category.

4. The computer-implemented method of any preceding claim, wherein automatically executing (S106) the respective display action for the media segment comprises:
determining, from the control data, whether there is a respective display action associated with the category indicated by the classification of that media segment; and
in response to a determination that there is a respective display action associated with the category, executing (S106) that display action.

5. The computer-implemented method of any preceding claim, wherein:
the metadata (206) includes one or more timestamps (210a-210n) associated with each media segment, wherein each timestamp (210a-210n) describes a relative time that the respective media segment occurs in the media content (200).

6. The computer-implemented method of any preceding claim, wherein executing (S106) the determined display action comprises retrieving a pre-processed version of the media segment for playback.

7. The computer-implemented method of any preceding claim, further comprising:
analysing the metadata (206) to determine a proportion of the media content (200) for which one or more display actions is to be executed, and
if the determined proportion exceeds a predetermined threshold proportion, generating an alert.

8. The computer-implemented method of any preceding claim, further comprising:
displaying further media content (200) identified based on the extracted metadata.

9. The computer-implemented-method of any preceding claim, wherein:
the classification of each media segment is determined based on a first classification determined based on the video content of the media segment; and a second classification determined based on the audio content of the media segment.

10. The computer-implemented method of claim 9 wherein the metadata (206) has been generated using a computer-implemented method comprising:
dividing (S300) the media content (200) into the plurality of media segments, and
applying (S302) a first machine-learning model to the video content of each media segment, the first machine-learning model configured to output the first classification for the video content in each media segment;
applying (S304) a second machine-learning model to the audio content of each media segment, the second machine-learning model configured to output the second classification for the audio content in each media segment; and
combining (S306) the first and second classifications to generate the classification of the segment.

11. The computer-implemented method of claim 10 wherein determining the second classification comprises:
receiving a transcript of the audio content, and applying the second machine-learning model to the transcript.

12. The computer-implemented method of any one of claims 9 to 11 wherein the computer-implemented method used to generate the metadata (206) further comprises:
analysing the classification of each media segment; and
where a plurality of adjacent media segments have the same classification, grouping (S308) those adjacent media segments to form a single metadata portion (208a-208n) with an associated classification describing each of the plurality of adjacent media segments.

13. A computer program product comprising instructions, which when executed by a computer, cause the computer to perform the computer-implemented method of any preceding claim.
